# EUROPEAN PATENT APPLICATION

(11) **EP 4 002 907 A1**
(43) Date of publication of application: **25.05.2022**
(21) Application number: 19937855.5
(22) Date of filing: 18.07.2019
(51) Int. Cl.: H04W 16/14, H04W 72/04, H04W 72/08

(54) **TERMINAL**

(71) Applicant: NTT DOCOMO, INC., Chiyoda-Ku Tokyo 100-6150 (JP)
(72) Inventor: HARADA, Hiroki, Tokyo 100-6150 (JP); KURITA, Daisuke, Tokyo 100-6150 (JP); NAGATA, Satoshi, Tokyo 100-6150 (JP); WANG, Lihui, Beijing, 100190 (CN)
(74) Representative: Hoffmann Eitle
(86) International application number: PCT/JP2019/028369
(87) International publication number: WO 2021/009927

(57) **Abstract**

A terminal including: a reception unit configured to receive, from a base station apparatus, configuration information having one or more slot format combinations each including a slot format and a slot format combination ID; and a control unit configured, when the reception unit receives control information including a slot format combination ID, to determine whether a slot is outside a channel occupation time obtained by LBT performed by the base station apparatus based on a format index of the slot in a slot format corresponding to the slot format combination ID included in the control information.

## Description

### [Technical Field]

The present invention relates to a terminal in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving and the like are being considered.

In addition, the existing LTE system supports use of frequency bands different from licensed bands licensed to telecom operators (i.e., unlicensed bands, which can be also referred to as unlicensed carriers, unlicensed CCs) to expand frequency bands. As the unlicensed band, for example, the 2.4-GHz band or the 5-GHz band where Wi-Fi (registered trademark) or Bluetooth (registered trademark) can be used are assumed.

Specifically, Rel.13 supports Carrier Aggregation (CA), which aggregates the carrier (CC) of the licensed band and the carrier (CC) of the unlicensed band. Like this, communication using the unlicensed band with the license band is called License-Assisted Access (LAA).

In a wireless communication system that performs communication using an unlicensed band together with a licensed band, in downlink, the base station apparatus performs channel sensing (carrier sensing) to verify whether there is transmission by other devices (e.g., base station apparatus, user terminal, Wi-Fi device, etc.) prior to transmitting data in the unlicensed band. Once the sensing results confirm that there is no transmission of other devices, transmission opportunity is obtained and the transmission can be performed for a predetermined period. This operation is called Listen Before Talk. The predetermined period is also referred to as Channel Occupancy Time (COT).

### [Prior Art Documents]

### [Non-Patent Documents]

[Non-Patent Document 1] 3GPP TS 38.331 V15.6.0 (2019-06)
[Non-Patent Document 2] 3GPP TS 38.213 V15.6.0 (2019-06)
[Non-Patent Document 3] 3GPP TS 38.212 V15.6.0 (2019-06)

### [Summary of Invention]

### [Problem to be Solved by the Invention]

When the user terminal receives information indicating whether or not a slot is in the COT from the base station apparatus, the user terminal can perform UL transmission, for example, without LBT or with a short time LBT within the COT. The user terminal can also change PDCCH monitoring operation inside and outside the COT.

The present invention has been made in view of the foregoing points, and is intended to provide a technique for allowing a user terminal to receive dynamic information indicating whether or not a slot is within a COT from the base station apparatus.

### [Means for Solving Problems]

According to the disclosed technique, there is provided a terminal comprising:
a reception unit configured to receive, from a base station apparatus, configuration information having one or more slot format combinations each including a slot format and a slot format combination ID; and
a control unit configured, when the reception unit receives control information including a slot format combination ID, to determine whether a slot is outside a channel occupancy time obtained by LBT performed by the base station apparatus based on a format index of the slot in a slot format corresponding to the slot format combination ID included in the control information.

### [Effects of the Invention]

According to the disclosed technique, a technique is provided which allows a user terminal to properly receive dynamic information indicating whether a slot is within the COT from the base station apparatus.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram for explaining a basic operation in a wireless communication system;
Fig. 4 is a diagram showing SlotFormatCombinationsPerCell;
Fig. 5 is a diagram showing an example of a method of notifying of a COT termination timing;
Fig. 6 is a diagram for explaining Example 1-1;
Fig. 7 is a diagram for explaining Example 1-2;
Fig. 8 is a diagram for explaining Example 1;
Fig. 9 is a diagram for explaining Example 2-1;
Fig. 10 is a diagram for explaining Example 2-2;
Fig. 11 is a diagram for explaining Example 2-3;
Fig. 12 is a diagram for explaining Examples 3-1 - 6-1;
Fig. 13 is a diagram for explaining Examples 3-2 - 6-2;
Fig. 14 is a diagram for explaining Examples 3-3 - 6-3;
Fig. 15 is a diagram for explaining Example 5;
Fig. 16 is a diagram for explaining FBE and LBE.
Fig. 17 is a diagram for explaining Example 8;
Fig. 18 is a diagram for explaining Example 9;
Fig. 19 is a diagram showing an example of a functional configuration of the base station apparatus 10 according to an embodiment of the present invention;
Fig. 20 is a diagram showing an example of a functional configuration of a user terminal 20 according to an embodiment of the present invention;
Fig. 21 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The present invention is applicable not only to NR but also to any wireless communication system.

In embodiments of the present invention, the duplex method may be a TDD (Time Division Duplex) method, a FDD (Frequency Division Duplex) method, or any other method (e.g., Flexible Duplex, etc.).

In an embodiment of the present invention, a wireless parameter or the like being "configured" may mean that a predetermined value is preconfigured or that a wireless parameter notified from the base station apparatus 10 or the user terminal 20 is configured.

### (System Configuration)

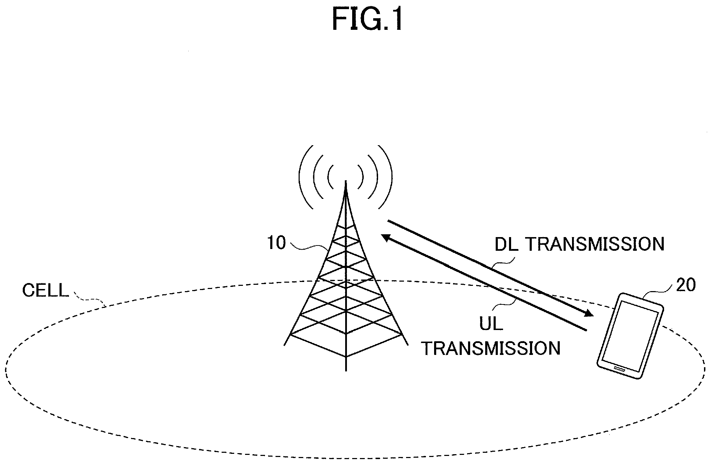

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and a plurality of base station apparatuses and a plurality of user terminals may exist. The user terminal 20 may be referred to as a "terminal." The wireless communication system according to this embodiment may be referred to as a NR-U system.

The base station apparatus 10 is a communication device that provides one or more cells and performs wireless communication with the user terminal 20. The physical resources of the radio signal are defined in the time domain and the frequency domain, the time domain may be defined in slots or OFDM symbols, and the frequency domain may be defined in sub-bands, subcarriers or resource blocks.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both perform communication by CA (Carrier Aggregation) via an SCell (Secondary Cell) and a PCell (Primary Cell).

The user terminal 20 is a communication device having a wireless communication function such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

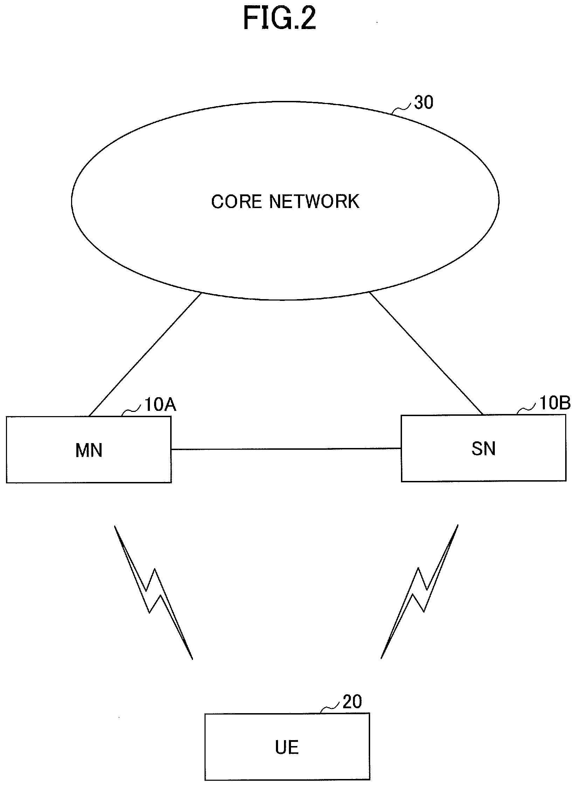

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called an MCG (Master Cell Group), and the cell group provided by the base station apparatus 10B that is an SN is called an SCG (Secondary Cell Group). The operations described later in Examples 1 to 9 may be performed in any of the configurations of Figs. 1 and 2.

In the wireless communication system according to the present embodiment, LBT described above is executed. The base station apparatus 10 or the user terminal 20 acquires a COT when the LBT result is idle, and performs transmission, and does not perform transmission when the LBT result is busy (LBT-busy) .

The wireless communication system according to this embodiment may perform carrier aggregation (CA) operation using an unlicensed CC and a licensed CC, dual connectivity (DC) operation using an unlicensed CC and a licensed CC, or a stand-alone (SA) operation using an unlicensed CC alone. CA, DC, or SA may be performed by any one system of NR and LTE. DC may be performed by at least two of NR, LTE, and other systems.

The user terminal 20 may assume the presence of a signal (e.g., a reference signal (RS) such as Demodulation Reference Signal (DMRS)) in a PDCCH or group common PDCCH (group common (GC)-PDCH) to detect a transmission burst from the base station apparatus 10.

The base station apparatus 10 may transmit a specific PDCCH (PDCCH or GC-PDCCH) containing a specific DMRS notifying of the start of COT at the start of the COT of the base station apparatus initiation event. At least one of the specific PDCCH and the specific DMRS may be referred to as a COT start notification signal. For example, the base station apparatus 10 transmits the COT start notification signal to one or more user terminals, and the user terminal can recognize the COT when the specific DMRS is detected.

### (Basic Operation Example)

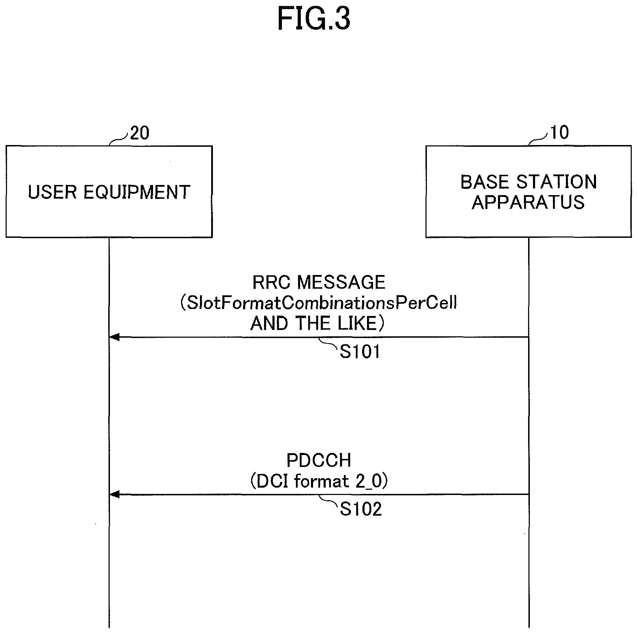

Fig. 3 shows a basic operation example of a wireless communication system according to the present embodiment. The operation shown in Fig. 3 is also performed in Examples 1 to 9, which will be described later.

As shown in Fig. 3, in S101, the base station apparatus 10 transmits a RRC message to the user terminal 20, and the user terminal 20 receives the RRC message. This RRC message contains a SlotFormatCombinationsPerCell information element for each serving cell. In S101, the base station apparatus 10 may notify the user terminal 20 of a RNTI value (called SFI-RNTI) for monitoring DCI format 2_0.

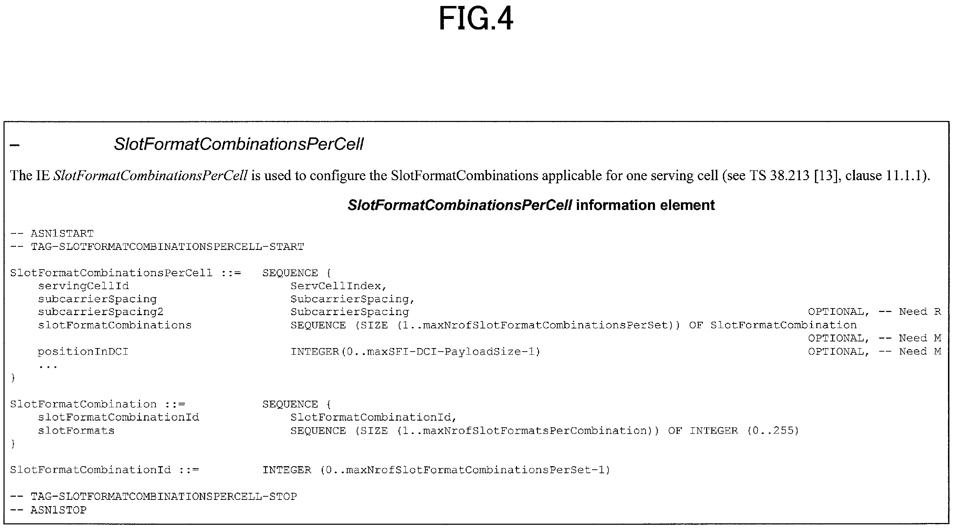

FIG. 4 shows SlotFormatCombinationsPerCell described in Non-Patent Document 1. In this embodiment, SlotFormatCombinationsPerCell described in Non-Patent Document 1 may be used, or SlotFormatCombinationsPerCell modified from SlotFormatCombinationsPerCell described in Non-Patent Document 1 may be used.

One SlotFormatCombinationsPerCell contains one or more SlotFormatCombinations and a bit position (positInDCI) in DCI Format 2_0 of the SlotFormatCombinationID for a serving cell configured in the user terminal 20.

One SlotFormatCombination contains SlotFormatCombinationID and slotFormats. SlotFormats is information in which format numbers (any number from 0 to 255) described in Table 11.1.1-1 in Non-Patent Document 2 are arranged for the number of slots. The format number may also be referred to as a format index. The number of slots may be a value corresponding to a period during which the user terminal 20 monitors the DCI format 2_0.

In this embodiment, Table 11.1.1-1 in Non-Patent Document 2 may be used as is, or a modified table may be used.

In S101, the user terminal 20 receives SlotFormatCombinationsPerCell for each serving cell to acquire correspondence information of SlotFormatCombinationID and a slot format for each serving cell. The acquired correspondence information is stored in a storage device, such as a memory, of the user terminal 20.

In S102 of Fig. 3, the base station apparatus 10 transmits the DCI format 2_0 to the user terminal 20 by a PDCCH (which may be a GC-PDCCH), and the user terminal 20 receives the DCI format 2_0.

As the DCI Format 2_0 in this embodiment, DCI Format 2_0 described in Non-Patent Document 2 and Non-Patent Document 3 may be used or DCI Format 2_0 modified from the DCI Format 2_0 described in Non-Patent Document 2 and Non-Patent Document 3 may be used.

The DCI Format 2_0 stores a SlotFormatCombination ID (also called SFI-index) for the relevant serving cell in the bit position notified by the RRC message for each serving cell.

The user terminal 20 can grasp slotFormats in the serving cell by reading slotFormatCombinationID at the bit position corresponding to the serving cell. In the following description, if no reference is made to a serving cell, it may be assumed that it is an operation in a serving cell.

For example, suppose that the user terminal 20 receives a DCI format 2_0 at the head portion of slot 1 and reads SlotFormatCombinationID = 2. If the user terminal 20 recognizes that the SlotFormatCombinationID=2 is {0, 1, 0, 1}, based on configuration by RRC, the user terminal 20 can recognize that the format of slot 1 is format 0, the format of slot 2 is format 1, the format of slot 3 is format 0, and the format of slot 4 is format 1.

According to the present embodiment, by using the DCI format 2_0, the base station apparatus 10 notifies the user terminal 20 whether or not a slot is within a COT.

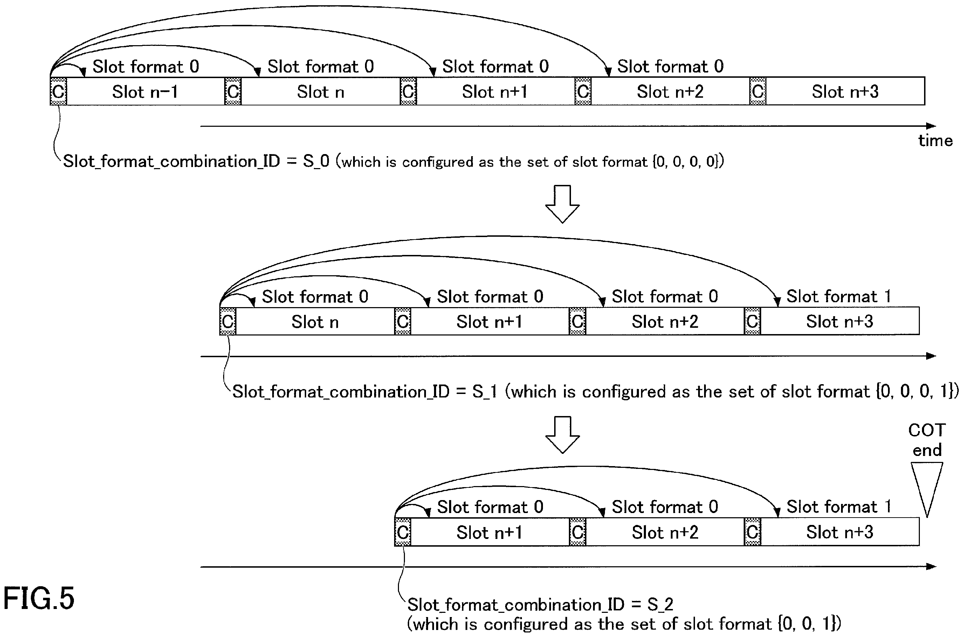

FIG. 5 illustrates an example of a method for notifying whether a slot is within a COT. In the example shown in Fig. 5, an end timing of the COT is notified by a change in the length (number of slots) of the slotFormats indicated by the SlotFormatCombinationID notified by DCI Format 2_0.

Specifically, as shown in Fig. 5, the length of slotFormats indicated by the SlotFormatCombinationID notified by the first and the second DCI Format 2_0 is 4, whereas the length of slotFormats indicated by the SlotFormatCombinationID notified by the third DCI Format 2_0 is 3. The user terminal 20 recognizes that the length of slotFormats has changed from 4 to 3, and determines that the last slot in SlotFormats indicated by slotFormatCombinationID notified by the third DCI Format 2_0 is the end of the COT.

However, the method shown in Fig. 5 has a problem that flexibility of slotFormats notified by DCI Format 2_0 degrades. For DCI Format 2_0, it can be considered that, in addition to the SFI-index, a remaining COT length and a COT end notification are explicitly added. However, this method has the problem that change to the existing specification (e.g., Non-Patent Documents 1 to 3) becomes large (it is impossible to operate properly without making a large change. It is difficult to make a large change) . That is, with these techniques, there is a problem that the user terminal 20 may not be able to properly receive dynamic information about whether a slot is within a COT from the base station apparatus 10.

Hereinafter, Examples 1 to 9 will be described as a technique for allowing the user terminal 20 to receive dynamic information on whether or not a slot is within a COT appropriately from the base station apparatus 10. Any one of the examples 1 to 9 may be implemented in combination, unless there is a conflict.

### (Example 1)

First, Example 1 will be described. Example 1 notifies that a slot is outside a COT by using a specific format number in Table 11.1.1-1 (or a modification thereof) of Non-Patent Document 2. Hereinafter, Examples 1-1 and 1-2 will be described as examples.

### <Example 1-1>

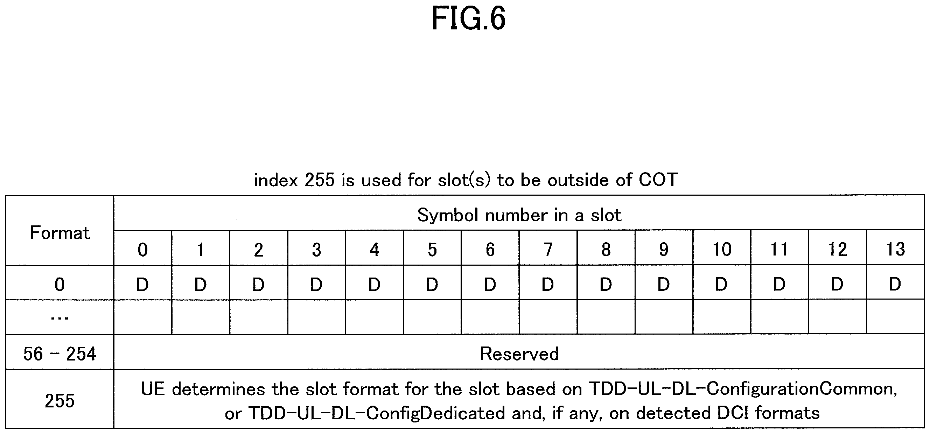

As a specific format number, 255 is used, for example, as shown in Fig. 6 (Extract from Table 11.1.1-1).

### <Example 1-2>

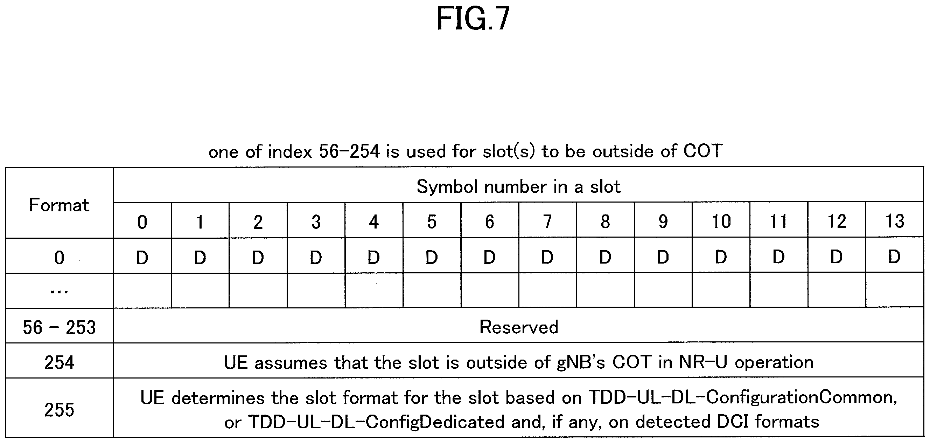

As a specific format number, one of the numbers 56-254 (reserved number) shown in Fig.7 (modified from the exerpt from Table 11.1.1-1) is used. Fig.7 illustrates, by way of example, use of 254.

### <Operation common to Examples 1-1 and 1-2>

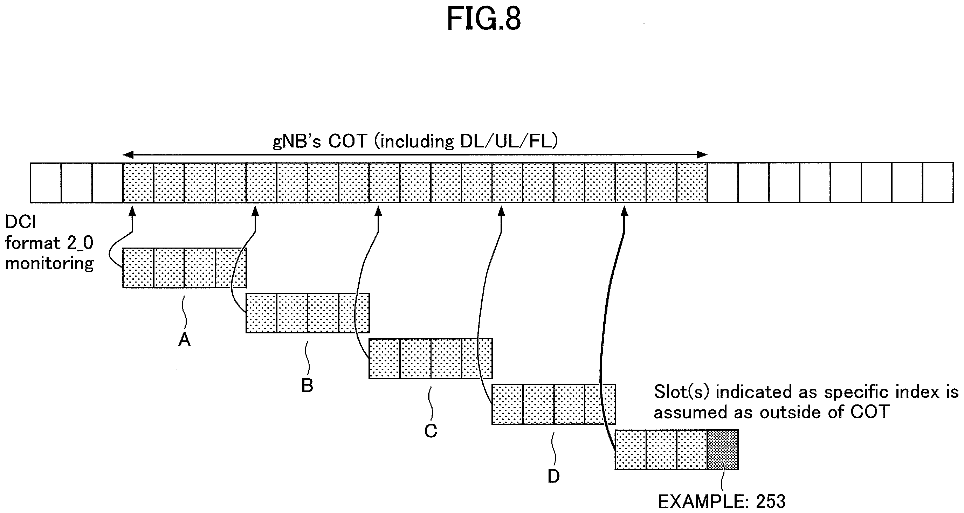

The common operation of Examples 1-1 and 1-2 will be described with reference to Figs. 3 and 8. Here, the same behavior applies to other specific format numbers using 253 as the specific format number.

In S101 of FIG. 3, slotFormatCombinations including slotFormats having the format number = 253 (where slotFormatCombinationID = 2) is configured to the user terminal 20.

In S102 of Fig. 3, for example, the user terminal 20 receives DCI Format 2_0 (which specifies other than slotFormatCombinationID = 2) four times shown in Fig. 8 by A to D, and then receives DCI Format 2_0 specifying slotFormatCombinationID = 2.

The slotFormats of slotFormatCombinationID = 2 is, for example, {0, 0, 0, 253}. Accordingly, the user terminal 20 determines that the last of the four slots is outside the COT. The user terminal 20 may determine that a slot of a format number other than the specified format number is within the COT in the slotFormats specified by the DCI format 2_0.

### <Example of within COT and outside-of-COT operation>

Here, as common operations of the Example 1 to 9, examples of operation in a COT and operation outside a COT in the user terminal 20 will be described.

For example, when the user terminal 20 determines that a slot is within a COT, it performs normal PDCCH monitoring in the slot, and when it determines that the slot is outside the COT, it performs PDCCH monitoring more frequently in the slot than in the normal case. Outside the COT, PDCCH transmission may occur in the middle of the slot. Therefore, monitoring of PDCCH should be performed highly frequently to grasp it.

As a specific method of switching the PDCCH monitoring operation, for example, a plurality of different search space configurations are configured to the user terminal 20 by RRC in advance, and the user terminal 20 determines whether a slot is within or outside a COT by DCI format 2_0 and turns each configuration on/off (activate/deactivate) based on whether the slot is inside or outside the COT.

For example, the user terminal 20 performs two-step PDCCH decoding (PDCCH blind decoding after recognizing presence of PDCCH transmission by DMRS) in slots outside the COT and performs only PDCCH blind decoding in the COT.

For example, the user terminal 20 that performs UL transmission performs a short-term LBT within the COT and performs a category 4 LBT outside the COT.

According to Example 1, the user terminal 20 can determine whether or not a slot is outside of a COT with little change to the specification.

### (Example 2)

Next, Example 2 will be described. When transmitting DCI format 2_0, the base station apparatus 10 adds a CRC (Cyclic Redundancy Check) to the DCI format 2_0 and masks (scrambles) the CRC with a RNTI.

The user terminal 20 detects (decodes) the DCI format 2_0 by performing a check with the CRC unmasked by the RNTI. In Example 2, the base station apparatus 10 notifies whether a slot in slotFormats indicated by DCI format 2_0 is at the end of a COT by differences in RNTI.

More specifically, the user terminal 20 determines that a slot of slotFormats indicated by DCI format 2_0 decoded by a normal RNTI (e.g., the SFI-RNTI notified by the SlotFormatIndicator described in Non-Patent Document 1) is within a COT of the base station apparatus 10.

The user terminal 20 determines that a slot is the end of a COT based on DCI format 2_0 decoded by a RNTI (here, referred to as a new RNTI) different from the normal RNTI.

Similar to the SFI-RNTI, the new RNTI may be configured from the base station apparatus 10 to the user terminal 20 by an RRC message (e.g., SlotFormatIndicator), or may be configured from the base station apparatus 10 to the user terminal 20 by a signal other than the RRC message (e.g., MAC CE), or may be specified as being fixed in advance in the specification.

Examples of the method in which the user terminal 20 determines a slot at the end of the COT include the following Examples 2-1, 2-2, and 2-3.

### <Example 2-1>

In Example 2-1, when the user terminal 20 detects DCI FORMAT 2_0 with a CRC scrambled by the new RNTI, the user terminal 20 determines that the last slot of slotFormats specified by the DCI Format 2_0 is the end of the COT.

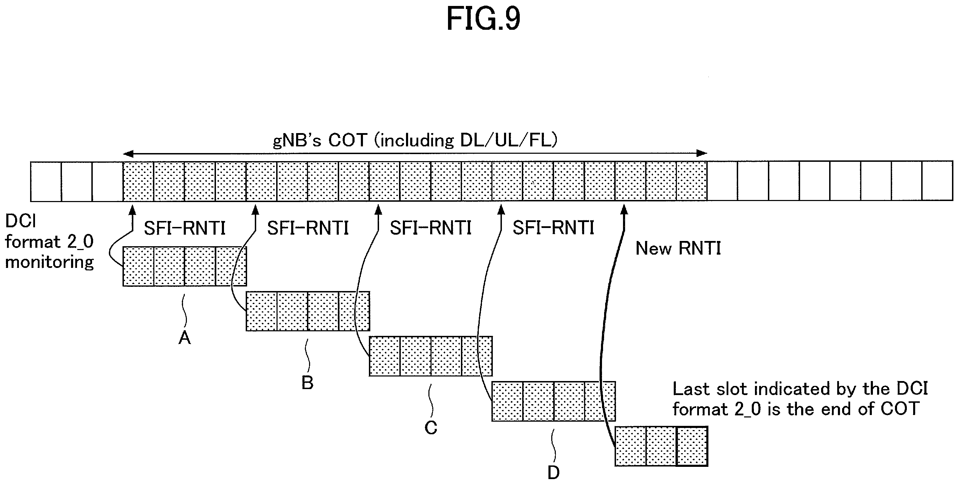

A specific example will be described with reference to Figs. 3 and 9. In S101 of Fig. 3, the slotFormatCombinations is configured to the user terminal 20, and the SFI-RNTI and the new RNTI are configured.

In S102 of Fig. 3, for example, the user terminal 20 detects DCI Format 2_0 (successfully decoded with SFI-RNTI) four times shown in Fig. 9 by A-D. The user terminal 20 determines that each slot of slotFormats specified in the DCI format 2_0 of four times is within the COT.

After the DCI Format 2_0 of four times, the user terminal 20 detects DCI Format 2_0 using the new RNTI. The slotFormats of the DCI format 2_0 is for example {0, 1, 1}, and the user terminal 20 determines that the last slot (third slot) is the last slot of the COT.

### <Example 2-2>

In Example 2-2, when the user terminal 20 detects DCI Format 2_0 with the CRC scrambled with the new RNTI, the user terminal 20 determines that the last slot of slotFormats specified in the last DCI Format 2_0 (detected by the SFI-RNTI) before the DCI Format 2_0 with the CRC scrambled with the new RNTI is the end of the COT.

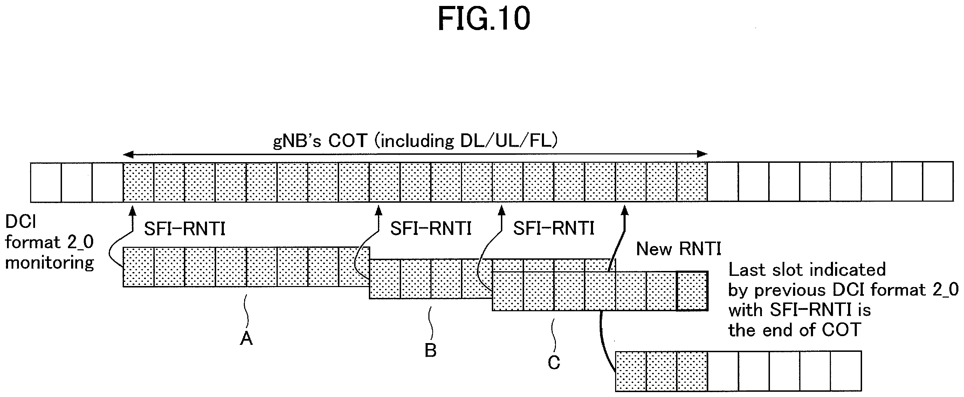

Referring to Fig. 10, a specific example showing a difference from Example 2-1 will be described. The user terminal 20 detects DCI formats 2_0 (successfully decoded by the SFI-RNTI) three times represented by A to C of FIG. 10. The user terminal 20 determines that each slot of slotFormats specified in the three-times DCI format 2_0 is within the COT.

After three times detection of DCI Format 2_0, when the user terminal 20 detects DCI Format 2_0 by the new RNTI, the user terminal 20 determines that the last slot in slotFormats specified in the last DCI Format 2_0 before the DCI Format 2_0 detected by the new RNTI is the end of the COT.

### <Example 2-3>

Example 2-3 corresponds to a combination of Examples 1 and 2. In Example 2-3, when the user terminal 20 detects DCI Format 2_0 having the CRC scrambled with the new RNTI, if the format number in the last slot of slotFormats specified in the DCI Format 2_0 is the specific slot number described in Example 1, the user terminal 20 determines that the last slot is outside of a COT.

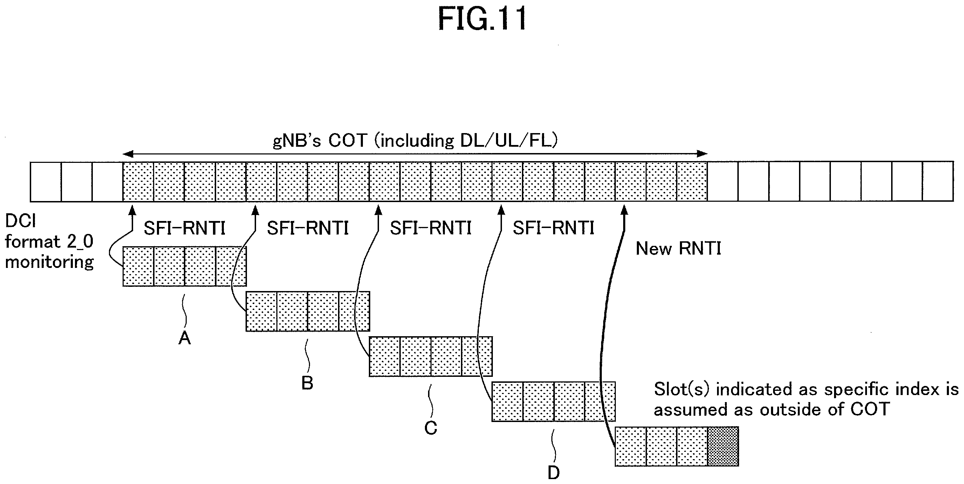

Referring to Fig. 11, a specific example showing a difference from Example 2-1 will be described. The user terminal 20 detects DCI formats 2_0 four times (successfully decoded by the SFI-RNTI) shown in A - D of Fig. 11. The user terminal 20 determines that each slot of slotFormats specified in the four-times DCI formats 2_0 is within a COT.

After the four-times of DCI Format 2_0, the user terminal 20 detects DCI Format 2_0 using the new RNTI to determine whether the format number of the last slot of the DCI Format 2_0 is a specific format number. If the format number of the last slot of the DCI Format 2_0 is the specific format number, the user terminal 20 determines that the last slot is outside of the COT.

According to Example 2, the user terminal 20 can appropriately determine inside or outside of the COT with few changes to the specification. This effect is similar for Examples 3 to 6.

### (Example 3)

Next, Example 3 will be described. The base station apparatus 10 maps DCI format 2_0 to a number of CCEs corresponding to an aggregation level, and transmits the DCI format 2_0. The user terminal 20 can decode the DCI format 2_0 by performing a decoding process assuming the aggregation level.

The base station apparatus 10 maps DCI format 2_0 to a certain search space (resource area to be monitored, period, etc.), and transmits the DCI format 2_0.The user terminal 20 can decode the DCI format 2_0 by performing decoding process to the resources in the search space.

In Example 3, the base station apparatus 10 notifies the user terminal 20 of whether a slot in slotFormats indicated by DCI format 2_0 is the end of COT by differences in the aggregation level or the search space (aggregation level/search space).

More specifically, the user terminal 20 determines that a slot of slotFormats indicated by DCI format 2_0 decoded with an aggregation level/search space (called a normal aggregation level/search space) other than a specific aggregation level/search space is within a COT of the base station apparatus 10.

The user terminal 20 determines that a slot is the end of the COT based on DCI format 2_0 decoded with the specific aggregation level/search space.

The specific aggregation level/search space may be configured from the base station apparatus 10 to the user terminal 20 by an RRC message, or it may be configured from the base station apparatus 10 to the user terminal 20 by a signal other than the RRC message (e.g., MAC CE), or it may be specified as fixed in advance in a specification.

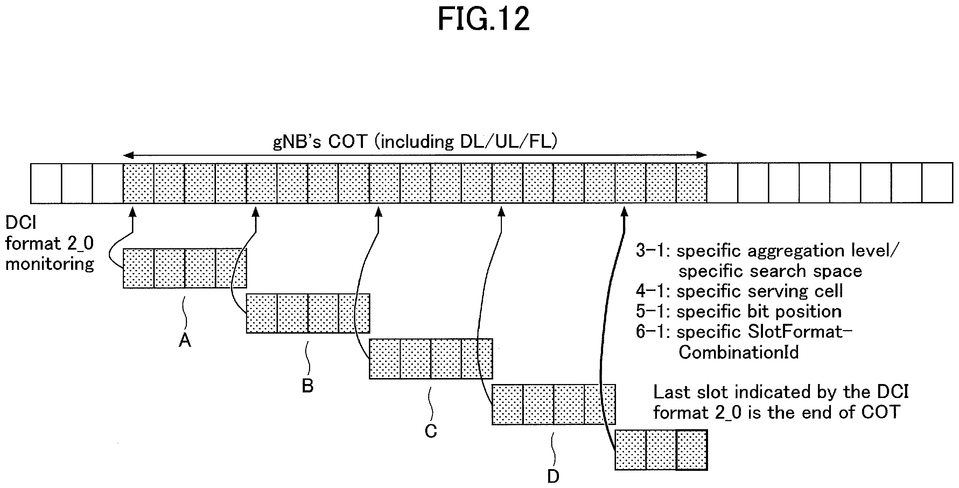

Examples of the method in which the user terminal 20 determines the slot at the end of the COT include the following Examples 3-1, 3-2, and 3-3. Figs. 12 to 14, as used below, are also commonly used in Examples 4 to 6.

### <Example 3-1>

In Example 3-1, when the user terminal 20 detects DCI FORMAT 2_0 by a specific aggregation level/search space, the user terminal 20 determines that the last slot of slotFormats specified in the DCI Format 2_0 is the end of the COT.

A specific example will be described with reference to Fig. 3 and Fig. 12(3-1). In S101 of Fig. 3, the slotFormatCombinations is configured to the user terminal 20.

In S102 of FIG. 3, for example, the user terminal 20 detects DCI format 2_0 four times (successfully decoded in a normal aggregation level/search space) shown in A-D in FIG. 12. The user terminal 20 determines that each slot of slotFormats specified in the DCI format 2_0 of four times is within a COT.

After the DCI Format 2_0 of four times, the user terminal 20 detects DCI Format 2_0 using a specific aggregation level/search space. The slotFormats of the DCI format 2_0 is for example {0, 1, 1}, and the user terminal 20 determines that the last (third) slot is the end of the COT.

### <Example 3-2>

In Example 3-2, when the user terminal 20 detects DCI Format 2_0 with a specific aggregation level/search space, the user terminal 20 determines that the last slot of slotFormats specified by the last DCI Format 2_0 (detected with a normal aggregation level/search space) before the DCI Format 2_0 detected with the specific aggregation level/search space is the end of the COT.

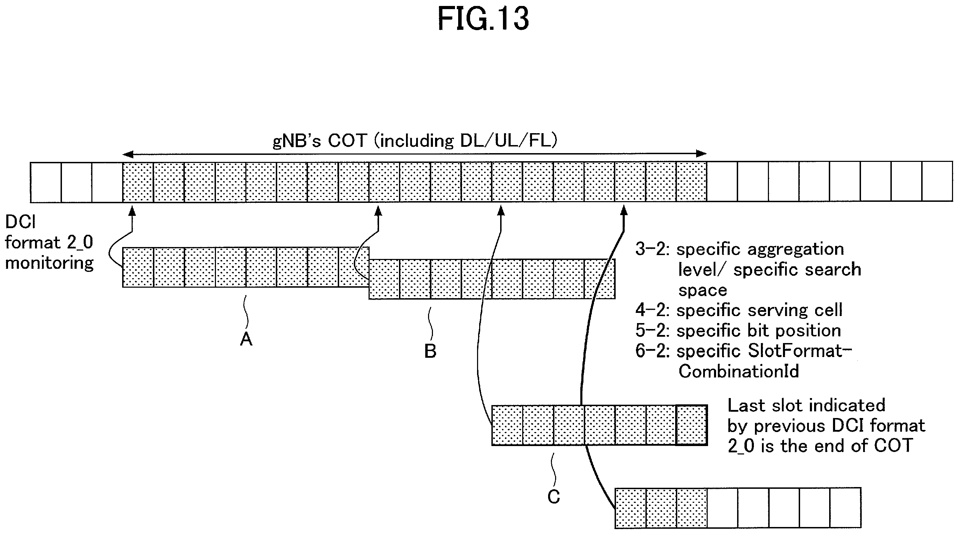

A specific example showing a difference from Example 3-1 will be described with reference to Fig. 13(3-2). The user terminal 20 detects DCI formats 2_0 three times (successfully decoded by a normal aggregation level/search space) shown as A to C in FIG. 13. The user terminal 20 determines that each slot of slotFormats specified in the DCI format 2_0 of three times is within the COT.

After the DCI Format 2_0 of three times, when the user terminal 20 detects DCI Format 2_0 by a specific aggregation level/search space, the user terminal 20 determines that the last slot in the slotFormats specified in the last DCI Format 2_0 before the DCI Format 2_0 is the end of the COT.

### <Example 3-3>

Example 3-3 corresponds to a combination of Examples 1 and 3. In Example 3-3, when the user terminal 20 detects DCI Format 2_0 by a specific aggregation level/search space, if the format number in the last slot of slotFormats specified in the DCI Format 2_0 is a specific slot number described in Example 1, the user terminal 20 determines that the last slot is outside of a COT.

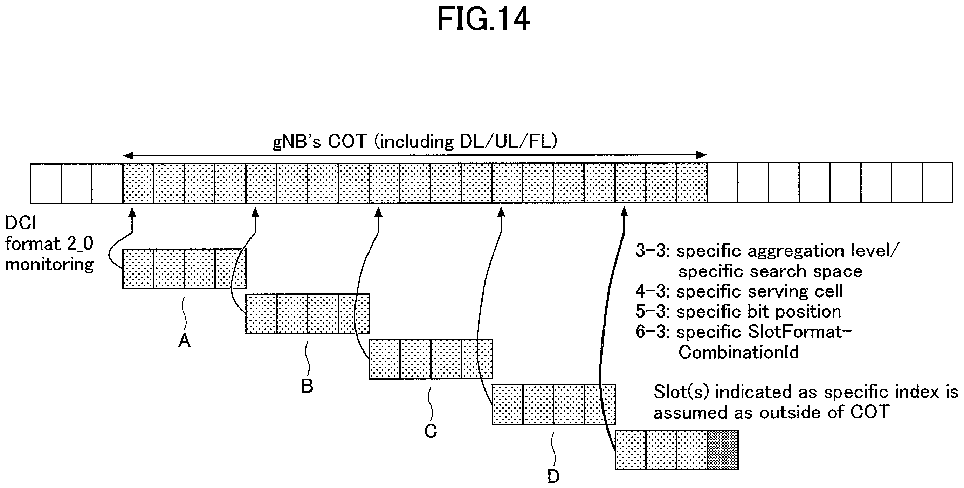

A specific example showing a difference from Example 3-1 will be described with reference to Fig. 14 (3-3). The user terminal 20 detects DCI formats 2_0 four times (successfully decoded by a normal aggregation level/search space) shown as A to D in FIG. 14. The user terminal 20 determines that each slot of slotFormats specified in the DCI format 2_0 of four times is within the COT.

After the DCI Format 2_0 of four times, when the user terminal 20 detects DCI Format 2_0 by a specific aggregation level/search space, the user terminal 20 determines whether the format number of the last slot of the DCI Format 2_0 is a specific format number. If the format number of the last slot of the DCI Format 2_0 is the specific format number, the user terminal 20 determines that the last slot is outside of the COT.

### (Example 4)

Example 4 will now be described. As described above, the base station apparatus 10 can notify the user terminal 20 of slotFormats for each serving cell by SlotFormatCombinationID located at a bit position for each serving cell in a DCI Format 2_0.

In Example 4, it is notified whether a slot in slotFormats indicated by a DCI format 2_0 is at the end of a COT by a difference of serving cells.

More specifically, the user terminal 20 determines that a slot of slotFormats specified for a serving cell other than a specific serving cell by a DCI format 2_0 is within a COT of the base station apparatus 10.

The user terminal 20 determines that a slot is the end of the COT based on slotFormats specified for the specific serving cell by the DCI format 2_0.

The specific serving cell may be configured from the base station apparatus 10 to the user terminal 20 by an RRC message, or it may be configured from the base station apparatus 10 to the user terminal 20 by a signal other than the RRC message (e.g., MAC CE). The specific serving cell may also be pre-specified in the specification as fixed (e.g. SpCell) .

Examples of the method in which the user terminal 20 determines the slot at the end of the COT include the following Examples 4-1, 4-2, and 4-3. The serving cells in Examples 4-1, 4-2, and 4-3 may be NR-U serving cells. Also, a serving cell other than a specific serving cell is called a normal serving cell.

### <Example 4-1>

In Example 4-1, when the user terminal 20 detects that slotFormats is indicated for a specific serving cell by a DCI Format 2_0, the user terminal 20 determines that the last slot of the slotFormats indicated in the DCI Format 2_0 is the end of a COT.

A specific example will be described with reference to Fig. 3 and Fig. 12 (4-1). In S101 of Fig. 3, the slotFormatCombinations and the like are configured to the user terminal 20.

In S102 of FIG. 3, for example, the user terminal 20 detects DCI Format 2_0 (specifying slotFormats in a normal serving cell) four times shown in A-D of FIG. 12. The user terminal 20 determines that each slot of slotFormats specified in the DCI format 2_0 of four times is within a COT.

After the DCI Format 2_0 of four times, the user terminal 20 detects that slotFormats is specified for a specific serving cell by a DCI Format 2_0. The slotFormats of the DCI format 2_0 is for example {0, 1, 1}, and the user terminal 20 determines that the last (third) slot is the end of the COT.

### <Example 4-2>

In Example 4-2, when the user terminal 20 detects that slotFormats is specified for a specific serving cell by a DCI Format 2_0, the user terminal 20 determines that the last slot specified by slotFormats specified in the last DCI Format 2_0 (specifying slotFormats of a normal serving cell) before the DCI Format 2_0 is the end of a COT.

A specific example of a difference from Example 4-1 will be described with reference to Fig. 13 (4-2). The user terminal 20 detects DCI formats 2_0 (specifying slotFormats of a normal serving cell) three times shown as A to C in FIG. 13. The user terminal 20 determines that each slot of slotFormats specified in the DCI format 2_0 of three times is within a COT.

After the DCI Format 2_0 of three times, when the user terminal 20 detects that slotFormats is specified for a specific serving cell by a DCI Format 2_0, the user terminal 20 determines that the last slot in slotFormats specified in the last DCI Format 2_0 before the DCI Format 2_0 is the end of the COT.

### <Example 4-3>

Examples 4-3 correspond to the combination of Examples 1 and 4. In Examples 4-3, when the user terminal 20 detects that slotFormats is specified for a specific serving cell by the DCI Format 2_0, if the format number in the last slotFormats specified in the DCI Format 2_0 is the specific slot number described in Example 1, the user terminal 20 determines that the last slot is out of COT.

A specific example of a difference from Example 4-1 will be described with reference to Fig. 14 (4-3). The user terminal 20 detects DCI Format 2_0 (specifying slotFormats of a normal serving cell) four times as shown by A-D in Figs. 14. The user terminal 20 determines that each slot of slotFormats specified by the DCI format 2_0 of four times is within a COT.

After the DCI Format 2_0 of four times, when the user terminal 20 detects by a DCI Format 2_0 that slotFormats is specified for a specific serving cell, the user terminal 20 determines whether the format number of the last slot of the DCI Format 2_0 is a specific format number or not. If the format number of the last slot of the DCI Format 2_0 is the specific format number, the user terminal 20 determines that the last slot is outside of the COT.

### (Example 5)

Next, Example 5 will be described. As described above, the base station apparatus 10 can notify the user terminal 20 of slotFormats for each serving cell by SlotFormatCombinationID located at a bit position for each serving cell in a DCI Format 2_0. The location where SlotFormatCombinationID is stored in the DCI Format 2_0 may be called a SFI-index field.

In Example 5, based on differences of SFI-index fields (bit positions) in which SlotFormatCombinationID is stored, whether a slot in slotFormats indicated by DCI format 2_0 is the end of a COT or not is notified.

More specifically, when the user terminal 20 detects that SlotFormatCombinationID is specified at a bit position other than a specific bit position (including a case where "a specific bit position" is within a specific bit range) by a DCI format 2_0, the user terminal 20 determines that a slot of slotFormats corresponding to the SlotFormatCombinationID is within a COT of the base station apparatus 10.

The user terminal 20 determines the end of the COT when detecting that SlotFormatCombinationID is specified at a specific bit position by a DCI format 2_0.

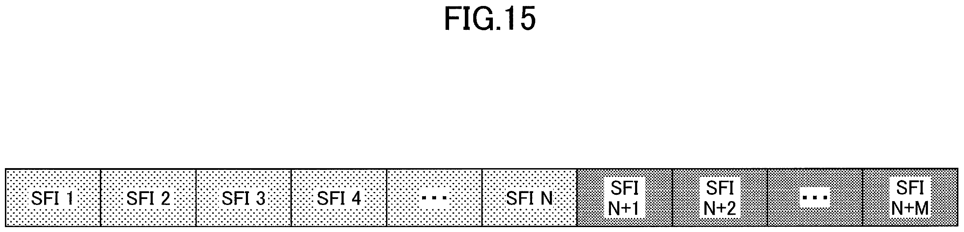

Fig. 15 shows an example of the SFI-index field in DCI format 2_0 of Example 5. In the example of Fig. 15, when the user terminal 20 detects that SlotFormatCombinationID is stored in a bit position in a range represented by SFI-1 to SFI-N, the user terminal 20 recognizes that slotFormats of the SlotFormatCombinationID is executed in a corresponding serving cell (for example, the serving cell 1 if the SFI-1 is used), and determines that each slot of the slotFormats is within a COT.

When the user terminal 20 detects that SlotFormatCombinationID is stored in a bit position in a range represented by SFI-N+1 to SFI-N+M, the user terminal 20 recognizes that slotFormats of the SlotFormatCombinationID have the meaning described in Examples 5-1 to 5-3, which will be described later.

Note that, when slotFormats of serving cells 1 to N is specified by normal bit positions 1 to N, a bit position of N+k is a specific bit position with the meaning described in Examples 5-1 to 5-3, and a remainder k obtained by dividing N+k by N (mod N) means a serving cell k, and the user terminal 20 may recognize that a specific bit position is specified for the serving cell k.

Examples of a method in which the user terminal 20 determines a slot at the end of a COT include the following Examples 5-1, 5-2, and 5-3. A bit position other than a specific bit position is called a normal bit position.

### <Example 5-1>

In Example 5-1, when the user terminal 20 detects that SlotFormatCombinationID is specified at a specific bit position by DCI format 2_0, the user terminal 20 determines that the last slot of the slotFormats specified at the specific bit position is the end of a COT.

A specific example will be described with reference to Fig. 3 and Fig. 12 (5-1). In S101 of Fig. 3, slotFormatCombinations or the like is configured to the user terminal 20.

In S102 of Fig. 3, for example, the user terminal 20 detects DCI Format 2_0 (which designates slotFormats at a normal bit position) four times shown in A to D in Fig. 12. The user terminal 20 determines that each slot of the slotFormats specified in the DCI formats 2_0 of four times is within a COT.

After the DCI Format 2_0 of four times, the user terminal 20 detects that slotFormats is specified at a specific bit position by a DCI Format 2_0.The slotFormats is for example {0, 1, 1}, and the user terminal 20 determines that the last (third) slot is the last of the COT.

### <Example 5-2>

In Example 5-2, when the user terminal 20 detects that SlotFormatCombinationID is specified at a specific bit position by a DCI Format 2_0, the user terminal 20 determines that the last slot of slotFormats specified in the last DCI Format 2_0 (specifying slotFormats at a normal bit position) before the DCI Format 2_0 is the end of a COT.

A specific example of differences from Example 5-1 will be described with reference to Fig. 13 (5-2). The user terminal 20 detects DCI format 2_0 (specifying slotFormats at a normal bit position) three times as shown by A to C in FIG. 13. The user terminal 20 determines that each slot of slotFormats specified in the DCI format 2_0 of three times is within a COT.

After the DCI Format 2_0 of three times, when the user terminal 20 detects that a DCI Format 2_0 designates SlotFormatCombinationID at a specific bit position, the user terminal 20 determines that the last slot in slotFormats specified by the last DCI Format 2_0 before the DCI Format 2_0 is the end of the COT.

### <Example 5-3>

Examples 5-3 corresponds to a combination of Examples 1 and 5. In Example 5-3, when the user terminal 20 detects that SlotFormatCombinationID is specified at a specific bit position by a DCI Format 2_0, if the format number in the last slot of slotFormats specified at the specific bit position is a specific slot number described in Example 1, the user terminal 20 determines that the last slot is outside of a COT.

A specific example of differences from Example 5-1 will be described with reference to Fig. 14 (5-3). The user terminal 20 detects DCI format 2_0 (specifying slotFormats at a normal bit position) four times as shown by A to D in FIG. 14. The user terminal 20 determines that each slot of slotFormats specified in the DCI formats 2_0 of four times is within the COT.

After the DCI Format 2_0 of four times, when the user terminal 20 detects that slotFormats is specified at a specific bit position by a DCI Format 2_0, the user terminal 20 determines whether the format number of the last slot of the slotFormats is a specifc format number. If the format number of the last slot of the slotFormats is the specific format number, the user terminal 20 determines that the last slot is outside of the COT.

### (Example 6)

Next, Example 6 will be described. As described above, the base station apparatus 10 can notify the user terminal 20 of slotFormats for each serving cell by SlotFormatCombinationID located at a bit position for each serving cell in a DCI Format 2_0. The location where SlotFormatCombinationID is stored in the DCI Format 2_0 may be called a SFI-index field.

In Example 5, the base station apparatus 10 notifies of whether or not a slot in slotFormats indicated by DCI format 2_0 is the end of a COT by differences in values (here referred to as "SFI-index field value") of SlotFormatCombinationID stored in the SFI-index field in DCI format 2_0.

More specifically, when the user terminal 20 detects that a SFI-index field value located in a range (referred to as a normal range) other than a specific range is designated by a DCI format 2_0, the user terminal 20 determines that a slot of slotFormats of the designation is within a COT of the base station apparatus 10.

The user terminal 20 determines the end of a COT when the user terminal 20 detects that a SFI-index field value within a specific range is designated by DCI format 2_0. For example, the user terminal 20 may identify whether or not a specific range is specified by MSB of SlotFormatCombinationID.

For example, when a value in a range of 0 to 127 is designated as a SFI-index field value, the user terminal 20 determines that it is a value in a normal range, and when a value in a range of 128 to 255 is designated as a SFI-index field value, the user terminal 20 determines that it is a value in a specific range.

When a value in a range of 128 to 255 is specified, the user terminal 20 may determine that a remainder of the value divided by 128 is a value designating slotFormats (that is, SlotFormatCombinationID).

Examples of the method in which the user terminal 20 determines a slot at the end of a COT include the following Examples 6-1, 6-2, and 6-3.

### <Example 6-1>

In Example 6-1, when the user terminal 20 detects that a SFI-index field value in a specific range is specified by a DCI format 2_0, the user terminal 20 determines that the last slot of slotFormats specified by the SFI-index field value is the end of a COT.

A specific example will be described with reference to Fig. 3 and Fig. 12 (6-1). In S101 of Fig. 3, the slotFormatCombinations or the like is configured to the user terminal 20.

In S102 of FIG. 3, for example, the user terminal 20 detects DCI Format 2_0 (which specifies a SFI-index field value within a normal range) four times as shown by A-D in FIG. 12. The user terminal 20 determines that each slot of slotFormats specified in the DCI formats 2_0 of four times is within a COT.

After the DCI Format 2_0 of four times, the user terminal 20 detects by DCI Format 2_0 that a SFI-index field value of a specific range is specified. The slotFormats specified by the SFI-index field value is for example {0, 1, 1}, and the user terminal 20 determines that the last (third) slot is the end of the COT.

### <Example 6-2>

In Example 6-2, when the user terminal 20 detects that a SFI-index field value in a specified range is specified by DCI Format 2_0, the user terminal 20 determines that the last slot of slotFormats specified by the last DCI Format 2_0 (specifying a SFI-index field value in a normal range) before the DCI Format 2_0 is the end of a COT.

A specific example of differences from the Example 6-1 will be described with reference to Fig. 13 (6-2). The user terminal 20 detects DCI format 2_0 (specifying a SFI-index field value in a normal range) three times as shown by A to C of FIG. 13. The user terminal 20 determines that each slot of slotFormats specified in the DCI format 2_0 of three times is within a COT.

After the DCI Format 2_0 of three times, when the user terminal 20 detects by DCI Format 2_0 that a SFI-index field value in a specific range is specified, the user terminal 20 determines that the last slot in slotFormats specified in the last DCI Format 2_0 before the DCI Format 2_0 is the end of the COT.

### <Example 6-3>

Example 6-3 corresponds to a combination of Examples 1 and 6. In Example 6-3, when the user terminal 20 detects that a SFI-index field value within a specific range is specified by DCI format 2_0, if the format number in the last slot of slotFormats specified by the SFI-index field value is a specific slot number described in Example 1, the user terminal 20 determines that the last slot is outside of a COT.

A specific example of differences from Example 6-1 will be described with reference to Fig. 14 (6-3). The user terminal 20 detects DCI formats 2_0 (specifying a SFI-index field value in a normal range) four times as shown by A to D of FIG. 14. The user terminal 20 determines that each slot of slotFormats specified in the DCI format 2_0 of four times is within a COT.

After the DCI Format 2_0 of four times, when the user terminal 20 detects by DCI Format 2_0 that a SFI-index field value in a specific rage is specified, the user terminal 20 determines whether the format number of the last slot of slotFormats specified by the SFI-index field value is a specific format number. If the format number of the last slot of the slotFormats is a specific format number, the user terminal 20 determines that the last slot is outside of a COT.

### (Example 7)

Example 7 will now be described. Example 7 can be applied to any of Examples 1-6, 8, and 9.

In Example 7, instead of a SFI-index field or in addition to a SFI-index field, one or more blocks identified by the following block number are transmitted by DCI Format 2_0. In other words, the DCI Format 2_0 contains one or more blocks identified by the following block numbers.

- Block number 1, block number 2, ... , Block number N

The start bit position of each block is notified from the base station apparatus 10 to the user terminal 20 by, for example, an RRC message (for example, positioninDCI). The bit position of each block corresponds, for example, to a serving cell. However, the bit position of each block may be unrelated to the serving cell.

The content of each block is notified from the base station apparatus 10 to the user terminal 20 by a higher layer signaling such as RRC. Each block includes, for example, the following information. Not all pieces of the following information are required. Any one of the following pieces of information may be included.

- SlotFormatIndicator (may be the same as or modified from the SlotFormatIndicator disclosed in Non-Patent Document 1);
- COT-related information (e.g., information indicating whether a slot is inside or outside of a COT, information indicating a timing of end of COT/remaining time of the COT, etc.);
- Subband information.

The subband information includes, for example, information indicating a frequency width of each of the one or more subbands and the corresponding ID for each subband. For example, in the base station apparatus 10, when LBT for a subband is OK and a COT for the subband is acquired, the base station apparatus 10 transmits DCI Format 2_0 (for example, DCI Format 2_0 of any of Examples 1 to 6) containing the ID representing the subband to the user terminal 20. Accordingly, the user terminal 20 can determine whether or not a slot is within a COT in units of subbands.

### (Example 8)

Example 8 will now be described. Example 8 can be applied to any of Examples 1-7, 9.

There are two types of LBTs: FBE (frame-based equipment) and LBE (load-based equipment).

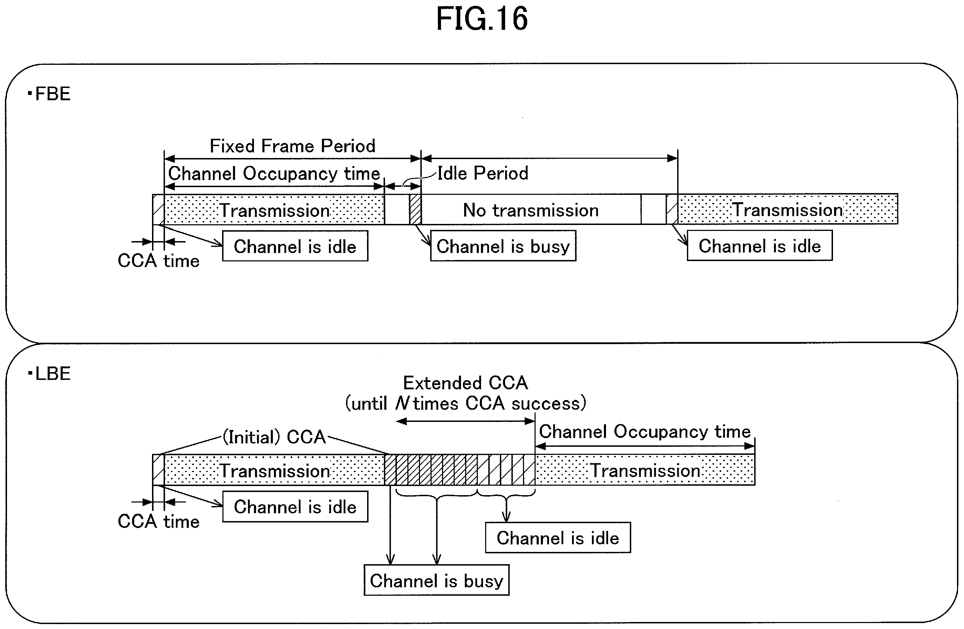

As illustrated as "FBE" in FIG. 16, in the FBE, LBT is executed at a fixed timing (period). In FBE, a COT start timing, a COT end timing, and a COT time length are always fixed.

Also, as illustrated as "LBE" in FIG. 16, LBT is performed at any timing in the LBE. That is, in LBE, any of the COT start timing, the COT end timing, and the COT time length can change over time.

When the FBE is executed as LBT of the base station apparatus 10, since the COT start timing, the COT end timing, and the COT time length of the COT are fixed, notification of a COT structure as described in Examples 1-6 may not be performed. When the LBE is executed as LBT of the base station apparatus 10, a notification of the COT structure as described in Examples 1-6 is performed.

Accordingly, in the Example 8, when the base station apparatus 10 performs the FBE, the base station apparatus 10 notifies the user terminal 20 of a COT structure (e.g., a COT start timing, a COT end timing, and a COT time length) by higher layer signaling (SIB or RRC, or SIB and RRC). In this case, the user terminal 20 assumes that dynamic notification of the COT structure as described in Examples 1 to 6 is not performed, and the user terminal 20 can determine whether or not a slot is inside a COT by using the COT structure notified by the higher layer signaling. The base station apparatus 10 may notify the user terminal 20 of the start timing, execution period, and time length of LBT instead of the COT structure.

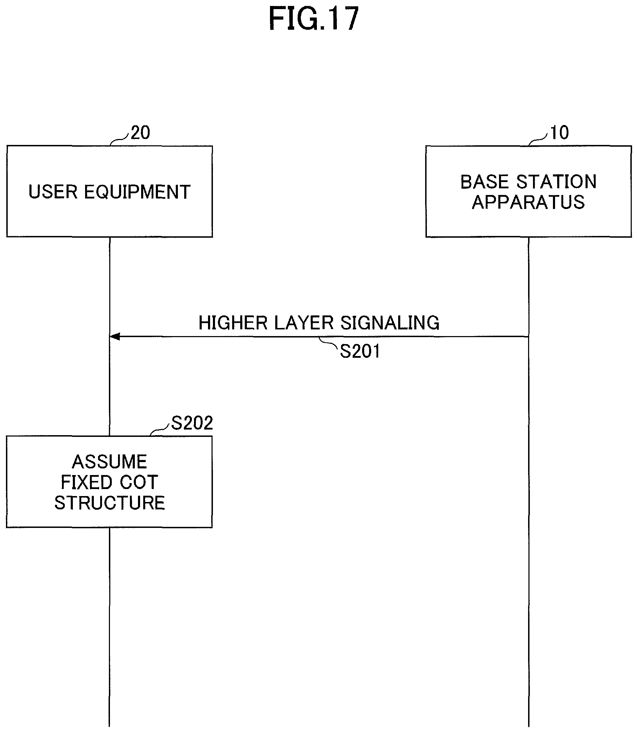

An example of the above-described operation is shown in Fig. 17. In S201 of Fig. 17, the user terminal 20 receives a COT structure from the base station apparatus 10 by higher layer signaling. In S202, the user terminal 20 determines whether a slot is inside or outside the COT assuming a fixed COT structure.

The user terminal 20 may determine that the FBE operation is performed in the base station apparatus 10 when the above-described configuration is configured, and may determine that the LBE operation is performed in the base station apparatus 10 when the above-described configuration is not performed.

The base station apparatus 20 may notify the user terminal 20 of an LBT type (FBE or LBE) by upper layer signaling (SIB or RRC, or, SIB and RRC).

According to the Example 8, efficient operation according to LBT types is enabled.

### (Example 9)

Example 9 will now be described. Example 9 can be applied to any of Examples 1-8.

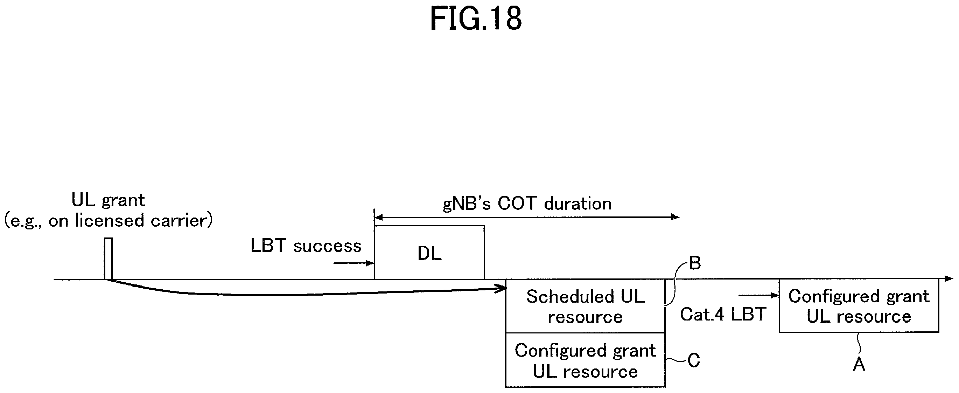

As shown in FIG. 18, UL resources scheduled by UL grant before executing LBT or UL resources by configurated grant may enter a COT newly acquired by the base station apparatus 10.

As shown by A in FIG. 18, in an outside of a COT, the user terminal 20 performs UL transmission by performing LBT of category 4 according to a preconfigured configuration, for example. When the UL transmission is scheduled within the COT, the LBT may not be performed.

However, when it is specified to perform category 4 LBT by scheduling/configuration of UL resources shown in B and C, it is unclear whether the user terminal 20 is allowed to perform a simplified LBT (category 1, 2, etc.) since the slot is inside a COT or whether category 4 should be performed.

Accordingly, in Example 8, LBT information of UL is included in DCI Format 2_0 (for example, the DCI Format 2_0 notified in DL of Fig. 18) described so far. The LBT information may be included in a block described in Example 7.

The LBT information may be a type of LBT to be performed for UL transmission or a gap time length for switching from DL to UL (it may be a gap time length from UL transmission to another UL transmission). The user terminal 20 can determine LBT to be performed based on the gap time length.

Further, the type (or the gap time length) of LBT to be performed for UL transmission, such as B and C shown in Fig. 18, may be notified from the base station apparatus 10 to the user terminal 20 by higher layer signaling (SIB or RRC). In this case, the user terminal 20 can execute LBT appropriately without notification of dynamic LBT information by DCI format 2_0.

### (Apparatus configuration)

Next, a functional configuration example of the base station apparatus 10 and the user terminal 20 that perform the processing and operations described above will be described. The base station apparatus 10 and the user terminal 20 include functions for implementing the above-described Examples 1-9. However, each of the base station apparatus 10 and the user terminal 20 may include only a part of the functions of the Examples 1-9.

### <Base Station apparatus 10>

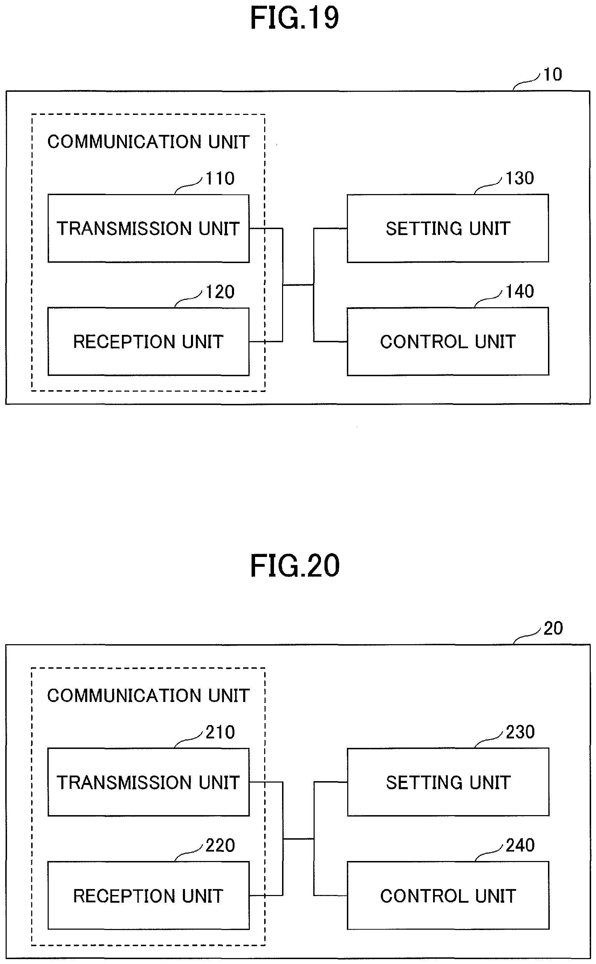

Fig. 19 is a diagram illustrating an example of a functional configuration of the base station apparatus 10. As shown in Fig. 19, the base station apparatus 10 includes a transmission unit 110, a reception unit 120, a setting unit 130, and a control unit 140. The functional configuration shown in FIG. 19 is only one example. If the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The receiving unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The setting unit 130 stores the preconfigured configuration information and various configuration information to be transmitted to the user terminal 20 in the storage device provided by the setting unit 130 and reads the configuration information from the storage device as necessary.

The control unit 140 schedules the DL reception or UL transmission of the user terminal 20 through the transmission unit 110. A function unit related to signal transmission in the control unit 140 may be included in the transmission unit 110, and a function unit related to signal reception in the control unit 140 may be included in the receiving unit 120. The transmission unit 110 may be called a transmitter, and the receiving unit 120 may be called a receiver.

### <User terminal 20>

Fig. 20 is a diagram illustrating an example of the functional configuration of the user terminal 20. As shown in Fig. 20, the user terminal 20 includes a transmission unit 210, a reception unit 220, a setting unit 230, and a control unit 240. The functional configuration shown in FIG. 20 is only one example. If the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The receiving unit 220 receives various signals wirelessly and acquires signals from higher layers from the received signal of the physical layer. The receiving unit 220 has a function to receive the NR-PSS, NR-SSS, NR-PBCH, and DL/UL/SL control signals transmitted from the base station apparatus 10, the DCI by the PDCCH, data by the PDSCH, and the like. For example, the transmitting unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the receiving unit 120 may receive PSCCH, PSSCCH, PSDCH, PSDCH, or PSBCH, etc. from another user terminal 20.

The setting unit 230 stores various configuration information received from the base station apparatus 10 or a user terminal 20 by the receiving unit 220 in the storage device provided by the setting unit 230 and reads it from the storage device as necessary. The setting unit 230 also stores the preconfigured configuration information.

The control unit 240 performs control of the user terminal 20. A function unit related to signal transmission in the control unit 240 may be included in the transmission unit 210, and a function unit related to signal reception in the control unit 240 may be included in the receiving unit 220. The transmission unit 210 may be referred to as a transmitter, and the reception unit 220 may be referred to as a receiver.

### [Summary]

In accordance with the present embodiment, at least, terminals shown in the following items 1 to 6 are provided.

### (Item 1)

A terminal including:
a reception unit 220 configured to receive, from a base station apparatus, configuration information having one or more slot format combinations each including a slot format and a slot format combination ID; and
a control unit 240 configured, when the reception unit 220 receives control information including a slot format combination ID, to determine whether a slot is outside a channel occupation time obtained by LBT performed by the base station apparatus based on a format index of the slot in a slot format corresponding to the slot format combination ID included in the control information.

### (Item 2)

A terminal including:
a reception unit 220 configured to receive, from a base station apparatus, configuration information having one or more slot format combinations each including a slot format and a slot format combination ID; and
a control unit 240 configured, when the reception unit 220 receives control information including a slot format combination ID, to determine a slot that is an end of a channel occupation time obtained by LBT performed by the base station apparatus based on a detection method of the control information, a serving cell where the slot format combination ID is designated, a bit position of the slot format combination ID in the control information, or a range to which the slot format combination ID belongs.

### (Item 3)

The terminal as described in item 2, wherein, in a case in which the control unit 240 determines the slot that is the end of the channel occupation time based on the detection method of the control information,
when the control unit 240 detects the control information by a specific RNTI, a specific aggregation level or a specific search space, the control unit
determines a last slot in a slot format corresponding to a slot format combination ID included in the control information to be the slot of the end of the channel occupation time, or
determines a last slot in a slot format corresponding to a slot format combination ID included in last control information received before the control information to be the slot of the end of the channel occupation time.

### (Item 4)

The terminal as described in item 2, wherein, in a case in which the control unit 240 determines the slot that is the end of the channel occupation time based on a serving cell where the slot format combination ID is designated,
when the control unit 240 detects that the slot format combination ID is designated to a specific serving cell, the control unit
determines a last slot in a slot format corresponding to a slot format combination ID included in the control information to be the slot of the end of the channel occupation time, or
determines a last slot in a slot format corresponding to a slot format combination ID included in last control information received before the control information to be the slot of the end of the channel occupation time.

### (Item 5)

The terminal as described in item 2, wherein, in a case in which the control unit 240 determines the slot that is the end of the channel occupation time based on a bit position of the slot format combination ID in the control information or a range to which the value of the slot format combination ID belongs,
when the control unit 240 detects that the slot format combination ID is at a specific bit position in the control information, or that the value of the slot format combination ID belongs to a specific range, the control unit
determines a last slot in a slot format corresponding to a slot format combination ID included in the control information to be the slot of the end of the channel occupation time, or
determines a last slot in a slot format corresponding to a slot format combination ID included in last control information received before the control information to be the slot of the end of the channel occupation time.

### (Item 6)

The terminal as described in any one of items 1-5, wherein the control information transmitted from the base station apparatus includes subband information in addition to the slot format combination ID.

Any of the configurations described in items 1 to 6 provides a technique that allows the user terminal to receive dynamic information indicating whether a slot is within a COT appropriately from the base station apparatus.

### (Hardware configuration)

The block diagrams (Figs. 19 and 20) used in the description of the above embodiment illustrate blocks in functional units. These functional blocks (configuration units) are realized by any combination of at least one of hardware and software. In addition, a method of realizing each functional block is not particularly limited. That is, each functional block may be realized using one physically or logically coupled device, or may be realized by connecting two or more physically or logically separated devices directly or indirectly (for example, using a wired or wireless connection) and using the plurality of devices. Each functional block may be realized by combining the above-described one device or the above-described plurality of devices with software.

Functions include determining, judging, calculating, computing, processing, deriving, investigating, looking up, ascertaining, receiving, transmitting, output, access, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuration unit) that makes transmission function is called a transmitting unit or a transmitter. In any case, as described above, the realization method is not particularly limited.

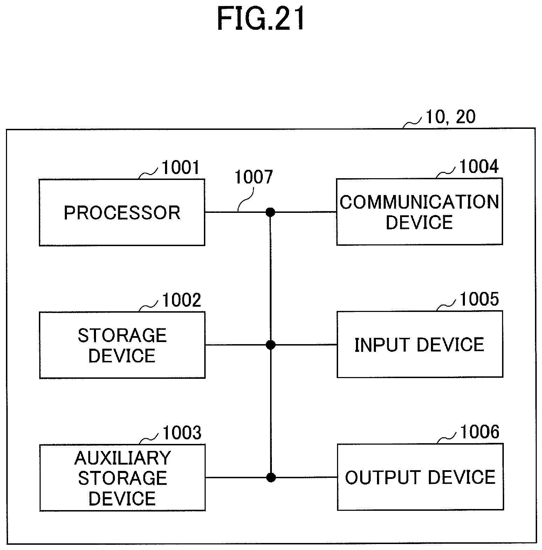

For example, the base station apparatus 10, the user terminal 20, and the like according to an embodiment of the present disclosure may function as a computer that performs processing of the radio communication method according to the present disclosure. Fig. 21 is a diagram illustrating an example of the hardware configuration of the base station apparatus 10 and the user terminal 20 according to an embodiment of the present disclosure. Each of the base station apparatus 10 and the user terminal 20 described above may be physically configured as a computer apparatus including a processor 1001, a storage device 1002, an auxiliary storage device 1003, a communication device 1004, an input device 1005, an output device 1006, a bus 1007, and the like.

In addition, in the following description, the term "device" can be read as a circuit, a unit, and the like. The hardware configuration of each of the base station apparatus 10 and the user terminal 20 may be configured to include one or more devices for each device illustrated in the diagram, or may be configured not to include some devices.

Each function in the base station apparatus 10 and the user terminal 20 can be realized by reading predetermined software (program) onto hardware, such as the processor 1001 and the storage device 1002, so that the processor 1001 performs an operation and controlling communication using the communication device 1004 or controlling at least one of reading and writing of data in the storage device 1002 and the auxiliary storage device 1003.

The processor 1001 controls the entire computer by operating an operating system, for example. The processor 1001 may be configured by a central processing unit (CPU) including an interface with peripheral equipment, a control device, an operation device, a register, and the like. For example, the control unit 140, the control unit 240, and the like described above may be realized by the processor 1001.

In addition, the processor 1001 reads a program (program code), a software module, data, and the like into the storage device 1002 from at least one of the auxiliary storage device 1003 and the communication device 1004, and executes various kinds of processing according to these. As the program, a program causing a computer to execute at least a part of the operation described in the above embodiment is used. For example, the control unit 140 of the base station apparatus 10 illustrated in Fig. 19 may be realized by a control program that is stored in the storage device 1002 and operated by the processor 1001. In addition, for example, the control unit 240 of the user terminal 20 illustrated in Fig. 21 may be realized by a control program that is stored in the storage device 1002 and operated by the processor 1001. Although it has been described that the various kinds of processing described above are executed by one processor 1001, the various kinds of processing described above may be executed simultaneously or sequentially by two or more processors 1001. The processor 1001 may be implemented by one or more chips. In addition, the program may be transmitted from a network through a telecommunication line.

The storage device 1002 is a computer-readable recording medium, and may be configured by at least one of, for example, a Read Only Memory (ROM), an Erasable Programmable ROM (EPROM), an Electrically Erasable Programmable ROM (EEPROM), and a Random Access Memory (RAM) . The storage device 1002 may be called a register, a cache, a main memory, and the like. The storage device 1002 can store a program (program code), a software module, and the like that can be executed to execute the communication method according to an embodiment of the present disclosure.

The auxiliary storage device 1003 is a computer-readable recording medium, and may be configured by at least one of, for example, an optical disk such as a Compact Disc ROM (CD-ROM), a hard disk drive, a flexible disk, and a magneto-optical disk (for example, a compact disk, a digital versatile disk, and a Blu-ray (Registered trademark) disk), a smart card, a flash memory (for example, a card, a stick, a key drive), a floppy (registered trademark) disk, and a magnetic strip. The auxiliary storage device 1003 may be called an auxiliary storage device. The storage medium described above may be, for example, a database including at least one of the storage device 1002 and the auxiliary storage device 1003, a server, or other appropriate media.

The communication device 1004 is hardware (transmitting and receiving device) for performing communication between computers through at least one of a wired network and a radio network, and is also referred to as, for example, a network device, a network controller, a network card, and a communication module. The communication device 1004 may be configured to include, for example, a high-frequency switch, a duplexer, a filter, a frequency synthesizer, and the like in order to realize at least one of frequency division duplex (FDD) and time division duplex (TDD), for example. For example, a transmitting and receiving antenna, an amplifier unit, a transmitting and receiving unit, a transmission line interface, and the like may be realized by the communication device 1004. The transmitting and receiving unit may be implemented so as to be physically or logically separated from the transmitting unit and the receiving unit.

The input device 1005 is an input device (for example, a keyboard, a mouse, a microphone, a switch, a button, and a sensor) for receiving an input from the outside. The output device 1006 is an output device (for example, a display, a speaker, and an LED lamp) that performs output to the outside. In addition, the input device 1005 and the output device 1006 may be integrated (for example, a touch panel).

In addition, respective devices, such as the processor 1001 and the storage device 1002, are connected to each other by the bus 1007 for communicating information. The bus 1007 may be configured using a single bus, or may be configured using a different bus for each device.

In addition, each of the base station apparatus 10 and the user terminal 20 may be configured to include hardware, such as a microprocessor, a digital signal processor (DSP), an Application Specific Integrated Circuit (ASIC), a Programmable Logic Device (PLD), and a Field Programmable Gate Array (FPGA), and some or all of the functional blocks may be realized by the hardware. For example, the processor 1001 may be implemented using at least one of these hardware components.

### (Supplement to embodiment)

While the embodiment of the invention has been described above, the disclosed invention is not limited to such an embodiment, and those skilled in the art will understand various variations, modifications, alternatives, substitutions, and the like. Although the description has been made using specific numerical examples to facilitate the understanding of the invention, those numerical values are merely examples and any appropriate values may be used unless otherwise specified. The division of the items in the above description is not essential to the invention, and the matters described in two or more items may be used in combination as necessary, or the matter described in a certain item may be applied to the matter described in another item (unless there is a contradiction). The boundaries between functional units or processing units in the functional block diagrams do not always correspond to the boundaries between physical components. The operation of a plurality of functional units may be physically performed by one component, or the operation of one functional unit may be physically performed by a plurality of components. In the processing procedure described in the embodiment, the order of the processing may be changed as long as there is no contradiction. Although the base station apparatus 10 and the user terminal 20 have been described using functional block diagrams for convenience of description of the processing, such equipment may be realized by hardware, software, or a combination thereof. The software operated by the processor of the base station apparatus 10 according to the embodiment of the invention and the software operated by the processor of the user terminal 20 according to the embodiment of the invention may be stored in a random access memory (RAM), a flash memory, a read only memory (ROM), an EPROM, an EEPROM, a register, a hard disk (HDD), a removable disk, a CD-ROM, a database, a server, or any other appropriate storage media.

In addition, the notification of information is not limited to the aspect/embodiment described in the present disclosure, and may be performed using other methods. For example, the notification of information may be performed using physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. In addition, the RRC signaling may be called an RRC message, and may be, for example, an RRC connection setup message or an RRC connection reconfiguration message.

Each aspect/embodiment described in the present disclosure may be applied to at least one of systems, which use Long Term Evolution (LTE), LTE-Advanced (LTE-A), SUPER 3G, IMT-Advanced, 4th generation mobile communication system (4G), 5th generation mobile communication system (5G), Future Radio Access (FRA), and new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and next-generation systems extended based on these. In addition, a plurality of systems may be combined (for example, a combination of 5G and at least one of LTE and LTE-A) to be applied.

In the processing procedure, sequence, flowchart, and the like in each aspect/embodiment described in this specification, the order may be changed as long as there is no contradiction. For example, for the methods described in this disclosure, elements of various steps are presented using an exemplary order, and the invention is not limited to the specific order presented.

The specific operation described as being performed by the base station apparatus 10 in this specification may be performed by its upper node in some cases. In a network including one or more network nodes each having the base station apparatus 10, it is obvious that various operations performed for communication with the user terminal 20 can be performed by at least one of the base station apparatus 10 and other network nodes (for example, MME, S-GW, and the like can be considered, but the network node is not limited thereto) other than the base station apparatus 10. Although a case where the number of other network nodes other than the base station apparatus 10 is one has been exemplified above, the other network nodes may be a combination (for example, MME and S-GW) of a plurality of other network nodes.

Information or signals described in the present disclosure can be output from a higher layer (or a lower layer) to a lower layer (or a higher layer). Information or signals described in the present disclosure may be input and output through a plurality of network nodes.

Information or the like that is input and output may be stored in a specific place (for example, a memory) or may be managed using a management table. The information or the like that is input and output can be overwritten, updated, or added. The information or the like that is output may be deleted. The information or the like that is input may be transmitted to another device.

The judging in the present disclosure may be performed based on a value expressed by 1 bit (0 or 1), may be performed based on Boolean (true or false), or may be performed by numerical value comparison (for example, comparison with a predetermined value).

Software, regardless of whether this is called software, firmware, middleware, microcode, a hardware description language, or any other name, should be interpreted broadly to mean instructions, instruction sets, codes, code segments, program codes, programs, subprograms, software modules, applications, software applications, software packages, routines, subroutines, objects, executable files, execution threads, procedures, functions, and the like.

In addition, software, instructions, information, and the like may be transmitted and received through a transmission medium. For example, in a case where software is transmitted from a website, a server, or other remote sources using at least one of the wired technology (coaxial cable, optical fiber cable, twisted pair, digital subscriber line (DSL), and the like) and the wireless technology (infrared, microwave, and the like), at least one of the wired technology and the wireless technology is included within the definition of the transmission medium.

The information, signals, and the like described in this disclosure may be expressed using any of a variety of different technologies. For example, data, instructions, commands, information, signals, bits, symbols, and chips that can be referred to throughout the above description may be represented by voltage, current, electromagnetic waves, magnetic field or magnetic particles, light field or photon, or any combination thereof.

In addition, the terms described in the present disclosure and the terms necessary for understanding the present disclosure may be replaced with terms having the same or similar meaning. For example, at least one of the channel and the symbol may be a signal (signaling). In addition, the signal may be a message. In addition, a component carrier (CC) may be called a carrier frequency, a cell, a frequency carrier, or the like.

The terms "system" and "network" used in this disclosure are used interchangeably.

In addition, the information, parameters, and the like described in the present disclosure may be expressed using an absolute value, may be expressed using a relative value from a predetermined value, or may be expressed using another corresponding information. For example, the radio resource may be indicated by an index.

The names used for the parameters described above are not limiting names in any way. In addition, equations and the like using these parameters may be different from those explicitly disclosed in the present disclosure. Since various channels (for example, PUSCH, a PUCCH, and a PDCCH) and information elements can be identified by any suitable names, various names allocated to these various channels and information elements are not limiting names in any way.

In the present disclosure, terms such as "base station (BS)", "radio base station", "base station apparatus", "fixed station", "NodeB", "eNodeB (eNB)", "gNodeB (gNB)","access point", "transmission point", "reception point", "transmission/reception point", "cell", "sector", "cell group", "carrier", and "component carrier" can be used interchangeably. The base station may also be referred to as terms, such as a macro cell, a small cell, a femto cell, and a pico cell.

The base station can include one or more (for example, three) cells. When the base station includes a plurality of cells, the entire coverage area of the base station can be divided into a plurality of smaller areas, and each of the smaller area can also provide a communication service using a base station subsystem (for example, a remote radio head (RRH). The term "cell" or "sector" refers to a part or the entirety of the coverage area of at least one of a base station and a base station subsystem that provides communication services in this coverage.

In the present disclosure, terms such as "mobile station (MS)", "user terminal", "user terminal (UE)", and "terminal" can be used interchangeably.

The mobile station may also be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms depending on those skilled in the art.

At least one of the base station and the mobile station may be called a transmitting device, a receiving device, a communication device, and the like. In addition, at least one of the base station and the mobile station may be a device mounted on a moving body, the moving body itself, and the like. The moving body may be a vehicle (for example, a car or an airplane), an unmanned moving body (for example, a drone or a self-driving car), or a robot (maned or unmanned) . In addition, at least one of the base station and the mobile station necessarily includes a device that does not move during a communication operation. For example, at least one of the base station and the mobile station may be an Internet of Things (IoT) device, such as a sensor.

In addition, the base station apparatus in the present disclosure may be read as user terminal. For example, each aspect/embodiment of the present disclosure may be applied to a configuration in which communication between base station apparatus and user terminal is replaced with communication between a plurality of pieces of user terminals 20 (which may be called, for example, Device-to-Device (D2D) or Vehicle-to-Everything (V2X)). In this case, the user terminal 20 may have the above-described function of the base station apparatus 10. In addition, terms such as "uplink" and "downlink" may be read as terms corresponding to terminal-to-terminal communication (for example, "side"). For example, an uplink channel, a downlink channel, and the like may be read as a side channel.

Similarly, the user terminal in the present disclosure may be read as base station apparatus. In this case, the base station apparatus may have the above-described function of the user terminal.

The terms "determining" used in the present disclosure may involve a wide variety of operations. For example, "determining" can include considering judging, calculating, computing, processing, deriving, investigating, looking up (search, inquiry) (for example, looking up in a table, database, or another data structure), and ascertaining as "determining". In addition, "determining" can include considering receiving (for example, receiving information), transmitting (for example, transmitting information), input, output, accessing (for example, accessing data in a memory) as "determining". In addition, "determining" can include considering resolving, selecting, choosing, establishing, comparing, and the like as "determining". In other words, "determining" can include considering any operation as "determining". In addition, "determining" may be read as "assuming", "expecting", "considering", and the like.

The terms "connected" and "coupled" or variations thereof mean any direct or indirect connection or coupling between two or more elements, and can include a case where one or more intermediate elements are present between two elements "connected" or "coupled" to each other. The coupling or connection between elements may be physical, logical, or a combination thereof. For example, "connection" may be read as "access". When used in this disclosure, two elements can be considered to be "connected" or "coupled" to each other using at least one of one or more wires, cables, and printed electrical connections and using some non-limiting and non-comprehensive examples, such as electromagnetic energy having wavelengths in a radio frequency domain, a microwave domain, and a light (both visible and invisible) domain.

The reference signal may be abbreviated as RS (Reference Signal), and may be called Pilot according to the applied standard.

The description "based on" used in this disclosure does not mean "based only on" unless otherwise specified. In other words, the description "based on" means both "based only on" and "based at least on".

Any reference to elements using designations such as "first" and "second" used in the present disclosure does not generally limit the quantity or order of the elements . These designations can be used in the present disclosure as a convenient method for distinguishing between two or more elements. Therefore, references to first and second elements do not mean that only two elements can be adopted or that the first element should precede the second element in any way.

"Means" in the configuration of each device described above may be replaced with "unit", "circuit", "device", and the like.

When "include", "including", and variations thereof are used in the present disclosure, these terms are intended to be inclusive similarly to the term "comprising". In addition, the term "or" used in the present disclosure is intended not to be an exclusive-OR.

A radio frame may be configured by one or more frames in the time domain. Each of one or more frames in the time domain may be referred to as a subframe. In addition, the subframe may be configured by one or more slots in the time domain. The subframe may be a fixed time length (for example, 1 ms) that does not depend on numerology.

Numerology may be a communication parameter applied to at least one of transmission and reception of a certain signal or channel. Numerology may indicate at least one of, for example, subcarrier spacing (SCS), bandwidth, symbol length, cyclic prefix length, transmission time interval (TTI), the number of symbols per TTI, radio frame configuration, specific filtering processing performed in the frequency domain by the transceiver, and specific windowing processing performed in the time domain by the transceiver.

A slot may be configured by one or more symbols (Orthogonal Frequency Division Multiplexing (OFDM) symbol, Single Carrier Frequency Division Multiple Access (SC-FDMA) symbol, and the like) in the time domain. A slot may be a time unit based on numerology.

A slot may include multiple mini-slots. Each mini-slot may be configured by one or more symbols in the time domain. In addition, the mini-slot may be called a subslot. A mini-slot may be configured by a smaller number of symbols than that in a slot. A PDSCH (or a PUSCH) transmitted in time units larger than the mini-slot may be referred to as PDSCH (or PUSCH) mapping type A. A PDSCH (or a PUSCH) transmitted using a mini-slot may be referred to as PDSCH (or PUSCH) mapping type B.

Each of the radio frame, the subframe, the slot, the mini-slot, and the symbol indicates a time unit when transmitting a signal. The radio frame, the subframe, the slot, the mini-slot, and the symbol may have different names corresponding thereto.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the known LTE, a period (for example, 1 to 13 symbols) shorter than 1 ms, or a period longer than 1 ms. In addition, the unit indicating the TTI may be called a slot, a mini-slot, or the like, instead of a subframe.

Here, the TTI refers to, for example, a minimum time unit of scheduling in radio communication. For example, in the LTE system, the base station performs scheduling for allocating radio resources (frequency bandwidth, transmission power, and the like that can be used in each user terminal 20) to each user terminal 20 in TTI units. In addition, the definition of the TTI is not limited to this.

The TTI may be a transmission time unit, such as a channel-encoded data packet (transport block), a code block, and a code word, or may be a processing unit, such as scheduling and link adaptation. In addition, when a TTI is given, a time section (for example, the number of symbols) in which a transport block, a code block, a code word, and the like are actually mapped may be shorter than the TTI.

In addition, when one slot or one mini-slot is called a TTI, one or more TTIs (that is, one or more slots or one or more mini-slots) may be a minimum time unit for scheduling. In addition, the number of slots (the number of mini-slots) configuring the minimum time unit of the scheduling may be controlled.

A TTI having a time length of 1 ms may be called a normal TTI (TTI in LTE Rel. 8-12), a long TTI, a normal subframe, a long subframe, a slot, and the like. A TTI shorter than the normal TTI may be called a short TTI, a partial or fractional TTI, a short subframe, a mini-slot, a subslot, a slot, and the like.

In addition, a long TTI (for example, a normal TTI or a subframe) may be read as a TTI having a time length exceeding 1 ms, and a short TTI may be read as a TTI shorter than the TTI length of the long TTI and equal to or longer than 1 ms.

A resource block (RB) is a resource allocation unit in the time domain and the frequency domain, and may include one or more consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or more symbols, and may be the length of one slot, one mini-slot, one subframe, or one TTI. One TTI, one subframe, and the like may each be configured by one or more resource blocks.

In addition, one or more RBs may be called a physical resource block (PRB: Physical RB), a sub-carrier group (SCG), a resource element group (REG), a PRB pair, an RB pair, and the like.

In addition, the resource block may be configured by one or more resource elements (REs). For example, one RE may be a radio resource area of one subcarrier and one symbol.

A bandwidth part (BWP) (which may be called a partial bandwidth or the like) may indicate a subset of consecutive common resource blocks (common RBs) for certain numerology in a certain carrier. Here, the common RB may be specified by an index of the RB with the common reference point of the carrier as a reference. The PRB may be defined by a certain BWP and numbered within the BWP.

The BWP may include a BWP for UL (UL BWP) and a BWP for DL (DL BWP). For the UE, one or more BWPs may be set in one carrier.

At least one of the set BWPs may be active, and it may not be assumed that the UE transmits and receives a predetermined signal/channel outside the active BWP. In addition, "cell", "carrier", and the like in the present disclosure may be read as "BWP".

The structures of the radio frame, the subframe, the slot, the mini-slot, and the symbol described above are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in the TTI, the symbol length, the cyclic prefix (CP) length, and the like can be changed in various ways.

In the present disclosure, in a case where articles, for example, a, an, and the in English, are added by translation, the present disclosure may include that nouns subsequent to these articles are plural.

In the present disclosure, the expression "A and B are different" may mean "A and B are different from each other". In addition, the expression may mean that "A and B each are different from C". Terms such as "separate", "coupled" may be interpreted similarly to "different".

Each aspect/embodiment described in the present disclosure may be used alone, may be used in combination, or may be switched and used according to execution. In addition, the notification of predetermined information (for example, notification of "X") is not limited to being explicitly performed, and may be performed implicitly (for example, without the notification of the predetermined information).

In the present disclosure, the transmission unit 210 and the reception unit 220 are examples of communication units. The transmission unit 110 and the reception unit 120 are examples of communication units. UECapability Enquiry is an example of a first RRC message that queries capabilities of a user terminal. UECapabilityInformation is an example of a second RRC message reporting UE capabilities.

While the present disclosure has been described in detail, it is apparent to those skilled in the art that the present disclosure is not limited to the embodiment described in the present disclosure. The present disclosure can be implemented as modified and changed aspects without departing from the spirit and scope of the present disclosure defined by the description of the claims. Therefore, the description of the present disclosure is intended for illustrative purposes, and has no restrictive meaning to the present disclosure.

### [Description of Symbols]

- 10: BASE STATION APPARATUS
- 110: TRANSMITTING UNIT
- 120: RECEIVING UNIT
- 130: SETTING UNIT
- 140: CONTROL UNIT
- 20: USER TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE10 Base station equipment

## Claims

1. A terminal comprising:
a reception unit configured to receive, from a base station apparatus, configuration information having one or more slot format combinations each including a slot format and a slot format combination ID; and
a control unit configured, when the reception unit receives control information including a slot format combination ID, to determine whether a slot is outside a channel occupancy time obtained by LBT performed by the base station apparatus based on a format index of the slot in a slot format corresponding to the slot format combination ID included in the control information.

2. A terminal comprising:
a reception unit configured to receive, from a base station apparatus, configuration information having one or more slot format combinations each including a slot format and a slot format combination ID; and
a control unit configured, when the reception unit receives control information including a slot format combination ID, to determine a slot that is an end of a channel occupancy time obtained by LBT performed by the base station apparatus based on a detection method of the control information, a serving cell where the slot format combination ID is designated, a bit position of the slot format combination ID in the control information, or a range to which the slot format combination ID belongs.

3. The terminal as claimed in claim 2, wherein, in a case in which the control unit determines the slot that is the end of the channel occupancy time based on the detection method of the control information,
when the control unit detects the control information by a specific RNTI, a specific aggregation level or a specific search space, the control unit
determines a last slot in a slot format corresponding to a slot format combination ID included in the control information to be the slot of the end of the channel occupation time, or
determines a last slot in a slot format corresponding to a slot format combination ID included in last control information received before the control information to be the slot of the end of the channel occupation time.

4. The terminal as claimed in claim 2, wherein, in a case in which the control unit determines the slot that is the end of the channel occupation time based on a serving cell where the slot format combination ID is designated,
when the control unit detects that the slot format combination ID is designated to a specific serving cell, the control unit
determines a last slot in a slot format corresponding to a slot format combination ID included in the control information to be the slot of the end of the channel occupation time, or
determines a last slot in a slot format corresponding to a slot format combination ID included in last control information received before the control information to be the slot of the end of the channel occupation time.

5. The terminal as claimed in claim 2, wherein, in a case in which the control unit determines the slot that is the end of the channel occupation time based on a bit position of the slot format combination ID in the control information or a range to which the value of the slot format combination ID belongs,
when the control unit detects that the slot format combination ID is at a specific bit position in the control information, or that the value of the slot format combination ID belongs to a specific range, the control unit
determines a last slot in a slot format corresponding to a slot format combination ID included in the control information to be the slot of the end of the channel occupancy time, or
determines a last slot in a slot format corresponding to a slot format combination ID included in last control information received before the control information to be the slot of the end of the channel occupancy time.

6. The terminal as claimed in any one of claims 1-5, wherein the control information transmitted from the base station apparatus includes subband information in addition to the slot format combination ID.
